# EUROPEAN PATENT APPLICATION

(11) **EP 4 730 116 A1**
(43) Date of publication of application: **22.04.2026**
(21) Application number: 24847951.1
(22) Date of filing: 05.07.2024
(51) Int. Cl.: G06F 9/38

(54) **INSTRUCTION PROCESSING METHOD AND DEVICE, AND STORAGE MEDIUM AND ELECTRONIC DEVICE**

(30) Priority: 31.07.2023 CN 202310963613
(71) Applicant: Sanechips Technology Co., Ltd., Shenzhen, Guangdong 518055 (CN)
(72) Inventor: WU, Xiyou, Shenzhen, Guangdong 518055 (CN)
(74) Representative: Cristinelli, Luca
(86) International application number: PCT/CN2024/104024
(87) International publication number: WO 2025/025991

(57) **Abstract**

Provided in the embodiments of the present disclosure are an instruction processing method and device, and a storage medium and an electronic device. The method comprises: on the basis of a preset instruction code, determining from among a plurality of instructions to be processed a first-type instruction to be processed; using an update mode corresponding to said first-type instruction to update a first vector parameter to a second vector parameter; and on the basis of the second vector parameter, splitting into a plurality of micro-operations a long vector instruction in the other instructions to be processed, and performing renaming processing on said other instructions on the basis of the plurality of micro-operations, wherein said other instructions are instructions among the plurality of instructions to be processed other than said first-type instruction. By means of the present disclosure, the problems in the related art of an execution part circuit in a processor being excessively complex and having an excessively large area and an enormous power consumption overhead due to the occurrence of a long vector in vector instructions are solved.

## Description

### Cross-Reference to Related Application

The present disclosure claims priority to Chinese Patent Application No. 202310963613.4, filed with the China National Intellectual Property Administration on July 31, 2023, and entitled "Instruction Processing Method and Device, and Storage Medium and Electronic Device", which is incorporated herein by reference in its entirety.

### Technical Field

The present disclosure relates to the field of Reduced Instruction Set Computing-V (RISC-V) high-performance out-of-order processor microarchitecture, and in particular, to an instruction processing method and device, and a storage medium and an electronic device.

### Background

Reduced Instruction Set Computing-V (RISC-V) is an open reduced instruction set architecture that adheres to the RISC design philosophy and incorporates the experiences and knowledge accumulated over decades of development in computer architecture. The RISC-V features an elegant instruction set architecture with modular standard extended instruction subsets such as M/A/F/D/C/B/P/V, catering to diverse application fields.

Currently, standard vector extension for the RISC-V includes vector instructions such as Vector Addition, Subtraction, Multiplication, Multiply-Accumulate, Bitwise AND, OR, XOR, Comparison, Shift, Min/Max, Permutation, and Reduction. The instruction length is fixed at 32 bits, with 32 general-purpose vector registers, a predicate register (Predicate), and relevant Control and Status Registers (CSR) for supporting conditional instruction execution and multiple memory access modes including Unit-Stride, Strided, and Scatter/Gather. Notably, the RISC-V supports Dynamic Typing: Vector Length (i.e., vector register grouping) and Single-Element Bit Width (SEW) are configured via vsetvl/vsetvli/vsetivli instructions, thereby saving encoding space, enabling mixed-precision operations, and maintaining software compatibility across different vector lengths. The vector register grouping parameter is configured through the vsetvl/vsetvli/vsetivli instructions, allowing multiple vector registers (up to 8 registers) to be concatenated into a larger vector register, effectively making the operable register width at most 8 times that of the currently implemented hardware register width. This feature simplifies program writing and significantly reduces the volume of executable codes. A VTYPE (a vector parameter of Vector Type, referred to as VTYPE hereinafter) of the CSR register stores the aforementioned vector register grouping parameter (e.g., Vector Register Group Multiplier (LMUL) Setting, referred to as LMUL hereinafter). After configuring this parameter via the vsetvl/vsetvli/vsetivli instructions, vector register grouping will be performed for the subsequent vector instructions based on this parameter, and an operation processing width of a single vector instruction will also follow this grouping length until a new vsetvl/vsetvli/vsetivli instruction re-updates this parameter. After the update, all subsequent vector instructions newer than the vsetvl/vsetvli/vsetivli instruction will execute according to the latest configuration value.

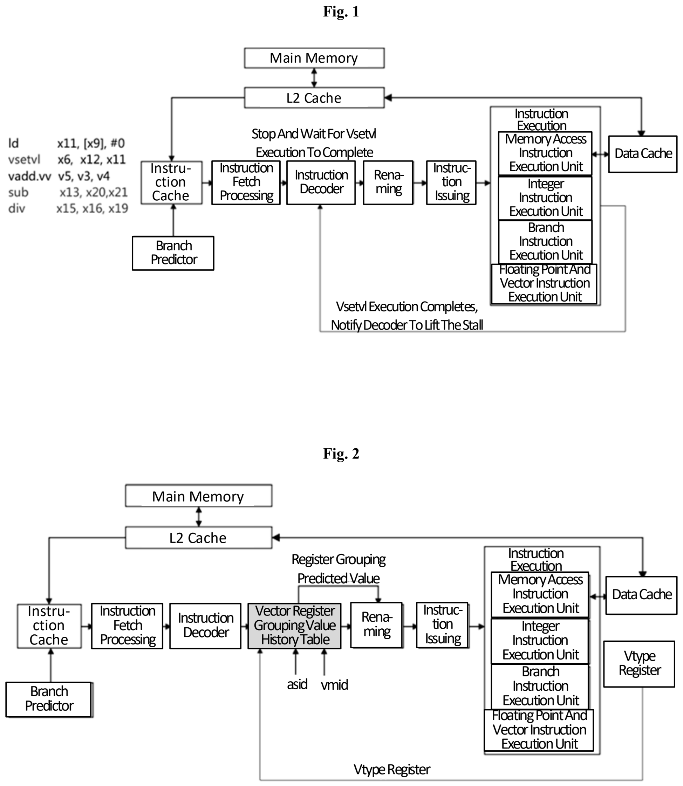

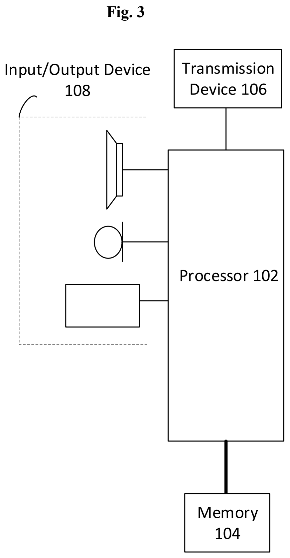

In related technologies, the solutions to the aforementioned issues include the following methods. Method 1: a pipeline of a high-performance processor core is generally divided into multiple processing stages. An instruction cache (high-speed cache memory) caches to-be-executed instructions, and an instruction fetch unit reads the instructions from the instruction cache and sends the instructions to an instruction decoder for decoding. Fig. 3 is a schematic diagram of an instruction processing flow in the related art. When the instruction decoder identifies that a current instruction is a vsetvl instruction for updating the vector parameter register, the instruction decoder sets a vector stall flag signal to 1, indicating that subsequent vector instructions should wait for the completion of the vsetvl instruction execution before proceeding to the next stage of Renaming. Method 2: Fig. 2 is a schematic diagram of another instruction processing flow in the related art, where a vector register grouping value history table is added after instruction decoding to predict the value of the register grouping updated by the vsetvl instruction.

However, Method 1 is prone to pipeline stalls caused by waiting for the completion of the execution of the vsetvl instruction to obtain the vector register grouping value (e.g., LMUL) or the Vector Element Bit Width (SEW), and the design process for the renaming at the instruction-based granularity in the renaming stage is complex. Although Method 2 can alleviate the stall problem in Method 1, Method 2 still retains the issue where a single vector instruction, due to supporting register grouping, requires far more register renaming than ordinary instructions. This necessitates occupying multiple read/write ports of a renaming mapping table or implementing read/write port arbitration, resulting in a complex design with high power consumption and area costs.

Currently, no effective solution has been found to address the problems in related technologies, such as the excessive complexity of the execution circuit in the processor for vector instructions and the high area and power consumption overhead.

### Summary

Embodiments of the present disclosure provide an instruction processing method and device, and a storage medium and an electronic device, which may at least solve the problems in the related art regarding the excessive complexity of the execution circuit in the processor for vector instructions and the high area and power consumption overhead.

According to an embodiment of the present disclosure, provided is an instruction processing method, including: determining at least one to-be-processed instruction of a first type from a plurality of to-be-processed instructions according to a preset instruction code, wherein the at least one to-be-processed instruction of the first type is used for updating a first vector parameter in a speculative value register; updating the first vector parameter to a second vector parameter by using an update manner corresponding to the at least one to-be-processed instruction of the first type; and splitting a long vector instruction among other to-be-processed instructions into a plurality of micro-operations based on the second vector parameter, and performing renaming processing on the other to-be-processed instructions according to the plurality of micro-operations, wherein the other to-be-processed instructions are instructions from the plurality of to-be-processed instructions excluding the at least one to-be-processed instruction.

According to another embodiment of the present disclosure, also provided is a bandwidth adjustment system, including: a determination module, configured to determine at least one to-be-processed instruction of a first type from a plurality of to-be-processed instructions according to a preset instruction code, wherein the at least one to-be-processed instruction of the first type is used for updating a first vector parameter in a speculative value register; an updating module, configured to update the first vector parameter to a second vector parameter by using an update manner corresponding to the at least one to-be-processed instruction of the first type; and a processing module, configured to split a long vector instruction among other to-be-processed instructions into a plurality of micro-operations based on the second vector parameter, and perform renaming processing on the other to-be-processed instructions according to the plurality of micro-operations, wherein the other to-be-processed instructions are instructions from the plurality of to-be-processed instructions excluding the at least one to-be-processed instruction.

According to still another embodiment of the present disclosure, also provided is a computer-readable storage medium. The computer-readable storage medium stores a computer program, wherein the computer program, when running on a processor, is configured to implement operations in any one of the method embodiments.

According to yet another embodiment of the present disclosure, also provided is an electronic device, which may include a memory and a processor, wherein the memory stores a computer program, and the processor is configured to run the computer program so as to implement operations in any one of the method embodiments.

Through the above operations, in the system architecture corresponding to a Central Processing Unit (CPU) core, at least one to-be-processed instruction of the first type in to-be-processed instructions is identified by using the preset instruction code, so as to obtain the second vector parameter through speculation between instruction decoders. Further, based on a register vector grouping value included in the second vector parameter, an instruction splitting subunit configured in an instruction decoding unit is instructed to split the long vector instruction among other to-be-processed instructions into a plurality of micro-operations. Thus, through fine-grained micro-operations, the area and power consumption overhead of the renaming and instruction issuing units for long vector processing are reduced, and the complexity and power consumption overhead on the execution unit for re-splitting long vector instructions into micro-operations are also reduced. That is, by determining the vector parameter in advance and using the vector parameter to split the long vector before executing the corresponding long vector, the problems in the related art regarding the excessive complexity of the execution circuit in the processor for vector instructions and the high area and power consumption overhead are solved.

### Brief Description of the Drawings

Fig. 1 is a schematic diagram of an instruction processing flow in the related art;
Fig. 2 is a schematic diagram of another instruction processing flow in the related art;
Fig. 3 is a block diagram of the hardware structure of a chip for the instruction processing method according to an embodiment of the present disclosure;
Fig. 4 is a schematic flowchart of the instruction processing method according to an embodiment of the present disclosure;
Fig. 5 is a schematic diagram of a system structure for using the instruction processing method in a CPU chip according to an embodiment of the present disclosure;
Fig. 6 is a schematic diagram of the encoding of the RISC-V vector extension instruction vset{i}vl{i} according to an embodiment of the present disclosure;
Fig. 7 is a schematic diagram of the composition of update sources of vtype_sp in the instruction processing method according to an embodiment of the present disclosure;
Fig. 8 is a schematic diagram of vector register grouping configuration according to an embodiment of the present disclosure;
Fig. 9 is a schematic diagram of the composition of two different computing resource configurations according to an embodiment of the present disclosure;
Fig. 10 is a schematic structural diagram of an instruction processing device according to an embodiment of the present disclosure; and
Fig. 11 is a schematic structural diagram of an electronic device according to an embodiment of the present disclosure.

### Detailed Description of the Embodiments

The present disclosure will be described in detail below with reference to the accompanying drawings and embodiments. It should be noted that the embodiments in the present disclosure and the features in the embodiments can be combined with each other without conflict.

It should be noted that the terms "first", "second", etc. in the specification, claims and above-mentioned accompanying drawings of the present disclosure are used to distinguish similar objects, and are not necessarily used to describe a specific order or sequence.

### Embodiment 1

The method embodiment provided in Embodiment 1 of the present disclosure may be executed in a chip, a computer terminal or a similar computing device. Taking running on a chip as an example, Fig. 3 is a block diagram of the hardware structure of a chip for the instruction processing method according to an embodiment of the present disclosure. As shown in Fig. 3, the chip 10 may include one or more (only one is shown in the figure) processors 102 (each of the one or more processors 102 may include, but is not limited to, a processing device such as a microprocessor (e.g., Micro-Controller Unit (MCU)) or a programmable logic device (e.g., Field Programmable Gate Array (FPGA))), a memory 104 for storing data, and a transmission device 106 for communication functions. Those having ordinary skill in the art may understand that the structure shown in Fig. 3 is only schematic, and Fig. 3 does not limit the structure of the above-mentioned electronic device. For example, the chip 10 may also include more or fewer components than those shown in Fig. 3, or have a different configuration from that shown in Fig. 3.

The memory 104 may be used to store software programs and modules of application software, such as program instructions/modules corresponding to the instruction processing method in the embodiments of the present disclosure. The one or more processors 102 execute various functional applications and data processing by running the software programs and modules stored in the memory 104, that is, implement the above-mentioned method. The memory 104 may include a high-speed random access memory, and may also include a non-volatile memory, such as one or more magnetic storage devices, flash memory, or other non-volatile solid-state memories. In some examples, the memory 104 may further include a memory remotely set relative to the one or more processors 102, and the remote memory may be connected to the chip 10 through a network. Examples of the above-mentioned network may include but not limited to the Internet, an enterprise intranet, a local area network, a mobile communication network, and combinations thereof.

The transmission device 106 is used to receive or send data via a network. Specific examples of the above-mentioned network may include a wireless network provided by a communication provider of the chip 10. In an example, the transmission device 106 may include a Network Interface Controller (NIC), which can be connected to other network devices and routers through a network cable to communicate with the Internet. In an example, the transmission device 106 may be a Radio Frequency (RF) module for communicating with the Internet in a wireless manner.

In an exemplary embodiment, in practical applications, the above-mentioned instruction processing method may be applied to a CPU processor, an RISC-V CPU core IP, or a System On Chip (SOC) chip integrated with RISC-V CPU cores, which is not limited by the present disclosure.

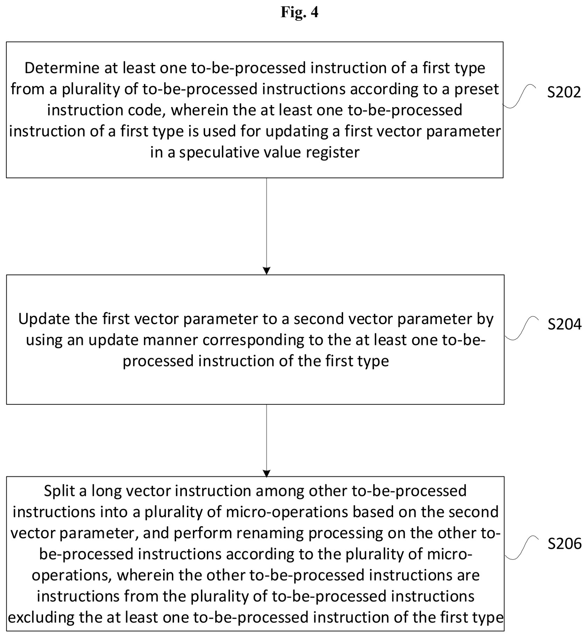

In this embodiment, an instruction processing method is provided. Fig. 4 is a schematic flowchart of the instruction processing method according to an embodiment of the present disclosure. As shown in Fig. 4, the process may include, but is not limited to, the following operations S202 to S206.

In operation S202, at least one to-be-processed instruction of a first type is determined from a plurality of to-be-processed instructions according to a preset instruction code, wherein the at least one to-be-processed instruction of the first type is used for updating a first vector parameter in a speculative value register.

In an exemplary embodiment, the above-mentioned preset instruction code may be a vector extension instruction determined based on a 32-bit instruction code of RISC-V, such as, a vset{i}vl{i} instruction code. The vset{i}vl{i} instruction code includes: vsetvl, vsetvli, vsetivli, etc. Among these instruction codes, vsetvl is used to indicate an instruction (including but not limited to vselvl) that needs to read a register to obtain a configuration value, and vsetvli is used to indicate an instruction (including but not limited to vsetvli and vsetivli) that does not need to read a register and can obtain a parameter configuration value from the encoding (immediate value) of the instruction; thus, when an instruction with the above-mentioned vset{i}vl{i} instruction code is identified from the to-be-processed instructions, the parameters for updating the vector parameter generation unit can be quickly determined according to the content corresponding to the instruction code.

In operation S204, the first vector parameter is updated to a second vector parameter by using an update manner corresponding to the at least one to-be-processed instruction of the first type.

It should be noted that after the vector parameter configured in the speculative value register is updated by using the vsetvl/vsetvli/vsetivli instruction, the subsequent vector instructions will be subjected to vector register grouping according to the second vector parameter, and an operation processing width of a single vector instruction is also determined according to this grouping length until a new vsetvl/vsetvl/vsetivli instruction re-updates the second vector parameter. After the update, all subsequent vector instructions newer than the vsetvl/vsetvli/vsetivli instruction will be executed according to the latest configuration value of the vector parameter in the speculative value register.

In operation S206, a long vector instruction among other to-be-processed instructions is split into a plurality of micro-operations based on the second vector parameter, and renaming processing is performed on the other to-be-processed instructions according to the plurality of micro-operations, wherein the other to-be-processed instructions are instructions from the plurality of to-be-processed instructions excluding the at least one to-be-processed instruction of the first type.

Through the above operations, in the system architecture corresponding to a Central Processing Unit (CPU) core, at least one to-be-processed instruction of the first type in to-be-processed instructions is identified by using the preset instruction code, so as to obtain the second vector parameter through speculation between instruction decoders. Further, based on a register vector grouping value included in the second vector parameter, an instruction splitting subunit configured in an instruction decoding unit is instructed to split the long vector instruction among other to-be-processed instructions into a plurality of micro-operations. Thus, through fine-grained micro-operations, the area and power consumption overhead of the renaming and instruction issuing units for long vector processing are reduced, and the complexity and power consumption overhead on the execution unit for re-splitting long vector instructions into micro-operations are also reduced. That is, by determining the vector parameter in advance and using the vector parameter to split the long vector before executing the corresponding long vector, the problems in the related art regarding the excessive complexity of the execution circuit in the processor for vector instructions and the high area and power consumption overhead are solved, thereby achieving the effect of reducing the design complexity of the execution circuit and realizing a better processing frequency within a limited area, and improving the user experience.

It can be understood that the emergence of long vectors in vector instructions leads to excessive complexity of naming circuits (for example, the source register of a long vector instruction needs to query multiple registers, the destination register of the instruction needs to apply for multiple physical registers, and the instruction issuing circuit (for example, the issue queue needs to save multiple register IDs and perform wake-up operations on multiple registers) and the instruction execution circuit (for example, the long vector circuit splits multiple short-vector micro-operations, which requires stall to suspend the pipeline)) are both complex, resulting in large area and power consumption overhead, making it impossible to execute vector instructions quickly, and the overall instruction processing effect is greatly reduced. However, by using the above method, the long vector is split in the instruction decoding unit. After splitting, the naming circuit, instruction issuing circuit, instruction execution circuit, etc. in the subsequent stages of the pipeline will not need to perceive the changes of the vector register grouping configuration (LMUL) and the bit width (SEW) of vector elements, and the required splitting logic circuit is reduced, thereby reducing the circuit complexity of the subsequent stages of the pipeline and optimizing the area and power consumption.

As an exemplary implementation, the above-mentioned method may also be applied to high-performance vector computing scenarios, such as processing of multimedia (audio, video, pictures, etc.) data, digital signal processing, scientific computing, AI and other computationally intensive fields, as well as high-performance CPU field application scenarios such as scalar-to-vector optimization in compilers. Thus, in practice, the speculative acquisition of vector parameters is used to split long vector instructions and vector instructions with resource constraints, thereby reducing the overhead of hardware resources (area, power consumption, etc.) caused by long vector instructions in the pipeline and achieving a better balance of Performance, Power, Area (PPA).

In an exemplary embodiment, when the above-mentioned instruction processing method is applied in a CPU chip, the following units will be added in the system structure: a vector parameter generation unit, a vector instruction splitting subunit added in the instruction decoding unit, an issue queue vtype_sp (vector parameter speculative value) added in the instruction issuing unit, and a vtype (vector parameter) speculative correction subunit added in the vsetvl instruction execution unit.

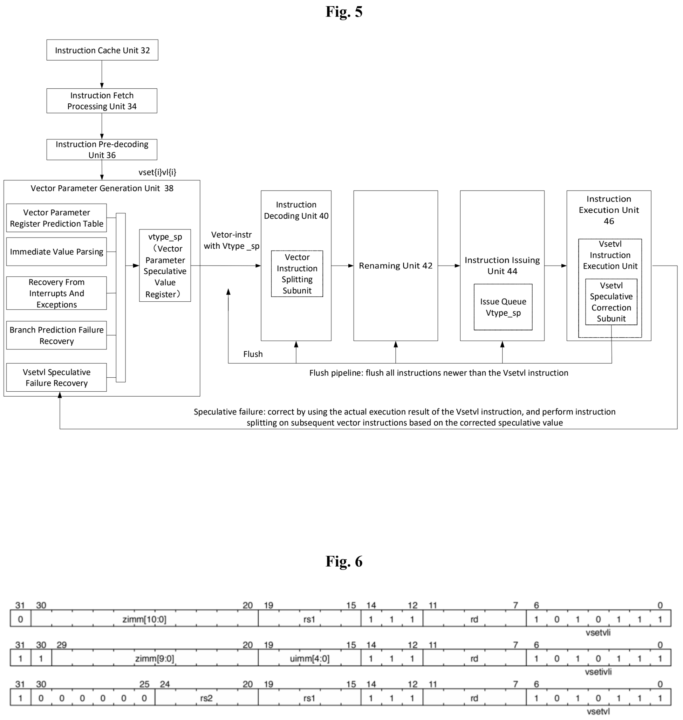

In an exemplary embodiment, Fig. 5 is a schematic diagram of a system structure for using the instruction processing method in a CPU chip according to an embodiment of the present disclosure, the system structure including units which are described in detail as follows.

An instruction cache unit 32 is configured to cache instructions retrieved from the next-level cache, wherein when instructions are executed cyclically or repeatedly, these instructions may be obtained from the instruction cache (high-speed buffer memory) without being obtained from the next-level cache, reducing the delay of fetching and thus providing performance.

An instruction fetch processing unit 34 is configured to query and obtain to-be-executed instructions from the instruction cache unit according to the instruction fetch instruction, including virtual-physical address translation, querying whether there is a hit, and if there is no hit, sending a request to query and obtain from the next-level cache, and performing alignment operations and other processing after obtaining the instructions.

An instruction pre-decoding unit 36 is configured to identify the three instructions vsetvl, vsetvli, and vsetivli according to the 32-bit instruction code of RISC-V, and notify the vector parameter generation unit of the identification result.

In an exemplary embodiment, the encoding content of the three instructions vsetvl, vsetvli, and vsetivli is shown in Fig. 6, which is a schematic diagram of the encoding of the RISC-V vector extension instruction vset{i}vl{i} according to an embodiment of the present disclosure.

A vector parameter generation unit 38 is configured to determine the vector parameter for processing subsequent vector instructions; mainly determine the value of the vector parameter to be saved in the vector parameter speculative value register through various methods.

Specifically, when it is determined that the current instruction identified by the instruction pre-decoding unit 36 is a vsetvli or vsetivli instruction, the immediate value to update the vtype register is parsed from the 32-bit instruction code corresponding to the vsetvli or vsetivli instruction, and the vector parameter of the vtype _sp register is updated with the immediate value.

If the current instruction is a vsetvl instruction, the feature information of the current thread (such as ASID and VMID, etc.) is used as matching information to search for matching prediction information in the vector parameter prediction table. If there is matching prediction information in the vector parameter prediction table, the predicted value of vtype is obtained from the prediction table, and the vtype _sp register is updated with the predicted value. It should be noted that if there is no matching prediction information in the vector parameter prediction table, the original value can be maintained, or updated to one of multiple preset possible schemes such as the commonly used LMUL=1.

It should be noted that the vector parameter in the vtype_sp register is equivalent to the speculative value of the vtype register, because the vector parameter can be updated by the vsetvli/vsetivli instruction on the wrong branch path, or updated by the vsetvl instruction through prediction, so the vector parameter is a speculative value.

If the speculative correction subunit in the execution unit detects a speculative failure of the vsetvl instruction, the execution result corresponding to the processing device will be used to update the vtype_sp register.

In an exemplary embodiment, if a Pipeline Flush based on the oldest instruction boundary such as an interrupt or exception occurs in the processing device, the value (committed value) of the vtype register needs to be used to update the vtype_sp register.

An instruction decoding unit 40 is configured to be responsible for the decoding processing of all instructions. When it is identified that the current instruction is a vector instruction, the vector instruction splitting subunit is used to split the subsequent vector instruction according to the LMUL value carried by the vector instruction from the vtype _sp register of the vector parameter generation unit.

A renaming unit 42 is configured to perform renaming processing on the split vector instructions.

It should be noted that the purpose of register renaming is to eliminate the two false data hazards of write-after-write and read-after-write between instructions, reduce pipeline stalls caused by these two false data hazards, and improve Instruction Level Parallelism (ILP), thereby achieving better performance. In high-performance processors, register renaming operations for multiple instructions are usually supported in a single clock cycle. The renaming unit generally supports the renaming of scalar registers (general purpose register, referred to as GPR), vector registers, and Control and Status Register (CSR). The renaming unit is generally equipped with a mapping table between logical registers and physical registers to record the mapping relationship between the logical registers and the physical registers.

An instruction issuing unit 44 is configured to process the split instructions according to the split granularity of the vector instructions. Usually, the issue queue needs to save the register ID of the instruction to query and judge whether the operands of the instruction in the issue queue are ready. All operands can be issued only when they are ready. If the operands are not ready, the register ID is also used for matching and wake-up, and can be issued normally after wake-up.

In practical applications, after the vsetvl instruction obtains the speculative vector parameter value, that is, the vtype_sp value, from the vector parameter generation unit, the vsetvl instruction will carry this speculative vector parameter value to each downstream processing unit. In the instruction issuing unit, each type of instruction (such as integer instruction, floating-point instruction, memory access instruction, etc.) has one or more issue queues. The issue queue storing the vsetvl instruction needs to save the vtype _sp value carried by the vsetvl. After the instruction is issued, the vtype_sp value should also be transmitted to the vsetvl execution unit for vtype speculative correction judgment.

An instruction execution unit 46 is configured to be responsible for the execution of the vsetvl instruction. The key to the execution of the vsetvl instruction is to obtain the configuration value of the vector parameter vtype from the general register, and use the configuration value to update the vtype register in the instruction commit phase. Another key function of the instruction execution unit 46 is to correct the vtype speculative value. The vtype configuration value in the execution result of the vsetvl is compared with the vtype_sp transmitted from the instruction issuing unit. If the vtype configuration value and the vtype_sp are not equal, it indicates a speculative failure; if the vtype configuration value and the vtype _sp are equal, it indicates a speculative success. If the speculative failure occurs, it is necessary to initiate a flush Pipeline to invalidate the instructions in the pipeline and correct the value of the vtype _sp register in the vector parameter generation unit. Then, after invalidating the instructions in the pipeline, all instructions newer than the vsetvl instruction will not use the vtype_sp speculative value with speculative failure for instruction splitting, and the newer instructions will use the corrected speculative value for instruction splitting.

In an exemplary embodiment, before updating the first vector parameter to the second vector parameter by using the update manner corresponding to the at least one to-be-processed instruction of the first type, the above-mentioned method further includes: determining an instruction count of the at least one to-be-processed instruction of the first type among the plurality of to-be-processed instructions; in a case where the instruction count is greater than a preset number, determining an update time for each of the multiple to-be-processed instructions of the first type to update the first vector parameter, so as to obtain multiple update times; and determining multiple update intervals according to a temporal relationship of the multiple update times, wherein target other to-be-processed instructions processed within each update interval adopt a target second vector parameter updated most recently in the update interval.

To put it simply, while using the at least one to-be-processed instruction of the first type to update the first vector parameter in the speculative value register, if it is determined that there are multiple to-be-processed instructions of the first type, in order to avoid abnormal splitting of subsequent long vector instructions caused by unordered vector parameter updates, it is necessary to identify the time when each to-be-processed instruction of the first type updates the vector parameter currently stored in the speculative value register during the update, and then use the latest vector parameter in the current clock cycle to update when splitting the long vector by using the updated vector parameter.

In an exemplary embodiment, the vector parameter generation unit can process multiple vtype vector parameter updates in the same clock cycle. For example, if there are 2 vsetvli instructions to update the vtype vector parameter in the same clock cycle, the latest value will be used to update the vtype _sp vector parameter speculative value register at the same time. In addition, it is necessary to ensure the order relationship between the vector instruction that needs to use the vtype value and the update value of vset{i}vl{i}, so as to ensure that the vector instruction can obtain a reasonable vtype _sp.

For example, there are 4 instruction sequences in the same clock, as follows:

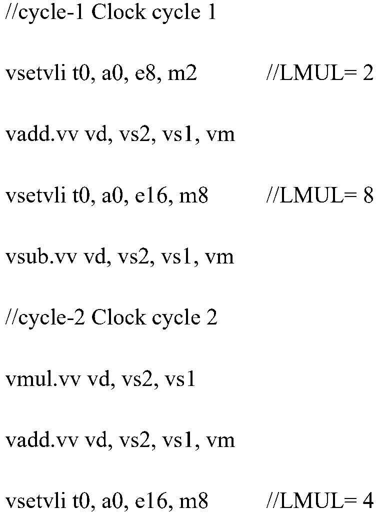

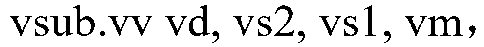

The instructions are increasingly newer from top to bottom. Then, in clock cycle 1, the vadd instruction should be split according to LMUL=2, so the LMUL carried by the vadd instruction to the decoding unit should be equal to 2, and the vsub instruction should carry LMUL=8 to the decoding unit for instruction splitting; at the end of clock cycle 1, the immediate update value of the second instruction (i.e., LMUL=8) should be updated to the vtype_sp register; further, in clock cycle 2, the vmul and vadd instructions should carry the vtype_sp value updated in clock cycle 1 (i.e., vtype with LMUL=8) to the decoding code, and the last vsub should carry the value to be updated by the third vsetvli instruction (i.e., LMUL=4) to the decoding unit for instruction splitting.

In an exemplary embodiment, updating the first vector parameter to the second vector parameter by using the update manner corresponding to the at least one to-be-processed instruction of the first type includes: in a case where the to-be-processed instruction of the first type is an immediate instruction, updating the first vector parameter to the second vector parameter according to encoding information of the immediate instruction; in a case where the to-be-processed instruction of the first type is a non-immediate instruction, updating the first vector parameter to the second vector parameter by using a predicted value associated with the non-immediate instruction.

That is to say, if the to-be-processed instruction is identified as a vsetivli/vsetvli instruction (immediate instruction) under the vset{i}vl{i} extension instruction, the configuration value obtained from the immediate value of the encoding of the instruction itself can be used to update the current vtype speculative value (the value of the vtype _sp register), and all subsequent vector instructions will carry this vtype speculative value to the instruction decoding unit until a new vset{i}vl{i} instruction is used for update, or the instruction commit part repairs the vtype speculative value, or the vtype_sp is corrected after the vector parameter speculative failure.

If the to-be-processed instruction is identified as a vsetvl instruction (non-immediate instruction) under the vset{i}vl{i} extension instruction, the vtype predicted value is obtained through prediction based on the thread feature information, and the vtype_sp (vtype speculative value) is updated with the predicted value; wherein the above-mentioned non-immediate instruction is used to indicate that the configuration value needs to be obtained through a register.

In addition, it should be noted that if the to-be-processed instruction is not any one of the vset{i}vl{i} extension instructions, the current vtype speculative value needs to be maintained, and all subsequent vector instructions will carry the current vtype speculative value to the instruction decoding unit until a new vset{i}vl{i} instruction or the instruction commit unit updates the speculative value of the vector parameter generation unit.

In an exemplary embodiment, updating the first vector parameter to the second vector parameter according to the encoding information of the immediate instruction includes: determining a first configuration value for vector register grouping configuration and a second configuration value corresponding to a bit width of vector elements according to the encoding information of the immediate instruction; and updating the first vector parameter to the second vector parameter by using the first configuration value and the second configuration value.

In an exemplary embodiment, updating the first vector parameter to the second vector parameter by using the predicted value associated with the non-immediate instruction includes: determining feature information corresponding to a thread that processes the non-immediate instruction; and searching the preset vector parameter prediction table for a predicted value that matches the feature information, and updating the first vector parameter to the second vector parameter by using the predicted value.

In an exemplary embodiment, after updating the first vector parameter to the second vector parameter by using the predicted value, the above-mentioned method further includes: acquiring an execution result corresponding to the non-immediate instruction, and determining an actual value corresponding to the execution result; and comparing the actual value with the predicted value to determine whether a speculative operation of updating the first vector parameter to the second vector parameter by using the predicted value is valid based on the comparison result.

It can be understood that since the vsetvl instruction (equivalent to the above-mentioned non-immediate instruction) is mostly used for context recovery after thread switching, prediction can be performed by using the thread history record, but the prediction may be wrong. In order to timely and effectively determine the wrong prediction, the vsetvl instruction can carry the vtype predicted value obtained from the prediction table all the way to the execution unit along with the vsetvl instruction itself. When the execution unit has obtained the source operand, the instruction is executed and the execution result is obtained, and the normal prediction is detected by comparing the execution result with the vtype predicted value.

In an exemplary embodiment, comparing the actual value with the predicted value to determine whether the speculative operation of updating the first vector parameter to the second vector parameter by using the predicted value is valid based on the comparison result includes: in a case where the actual value is the same as the predicted value, determining that the speculative operation of updating the first vector parameter to the second vector parameter by using the predicted value is valid; and in a case where the actual value is different from the predicted value, determining that the speculative operation of updating the first vector parameter to the second vector parameter by using the predicted value is invalid.

In an exemplary embodiment, when the execution result of the execution unit is not equal to the vtype predicted value, it indicates a prediction error and a speculative failure, and a new vtype predicted value needs to be re-determined; if the execution result of the execution unit is equal to the vtype predicted value, the speculative success is achieved, and the vtype predicted value is used to split and rename multiple long vectors in the clock cycle after the vsetvl instruction.

In an exemplary embodiment, after determining that the speculative operation of updating the first vector parameter to the second vector parameter by using the predicted value is invalid when the actual value is different from the predicted value, the above-mentioned method further includes: updating the first vector parameter in the speculative value register by using the actual value to obtain a third vector parameter; identifying at least one target to-be-processed instruction subsequent to the non-immediate instruction among the plurality of to-be-processed instructions; in a case where the target to-be-processed instruction is a long vector, splitting the target to-be-processed instruction into a plurality of target micro-operations by using the third vector parameter; and performing renaming processing on the target to-be-processed instruction according to the plurality of target micro-operations.

In an exemplary embodiment, since all to-be-processed instructions newer than the vsetvl instruction are processed based on the vtype predicted value, when the speculative failure occurs, in order to ensure that these to-be-processed instructions newer than the vsetvl instruction can be effectively processed, the flush invalid pipeline instruction processing is performed on these to-be-processed instructions, that is, the vtype predicted value carried in these to-be-processed instructions is invalidated, so that the vector instruction splitting processing cannot be performed according to the vtype predicted value with speculative failure. Then, the value of vtype_sp needs to be updated with the execution result of the vsetvl instruction, and the instruction fetch and execution are restarted from the next instruction of the vsetvl instruction to ensure that the instruction after re-fetching can perform subsequent processing based on the correct vtype_sp value.

Obviously, the embodiments described above are only part of, but not all of, the embodiments of the present disclosure. For a better understanding of the above method, the above process will be described below with reference to embodiments, but it is not used to limit the technical solution of the embodiment of the present disclosure.

In an exemplary embodiment, a RISC-V vector instruction processing method is provided, which specifically includes the following operations 1 to 5.

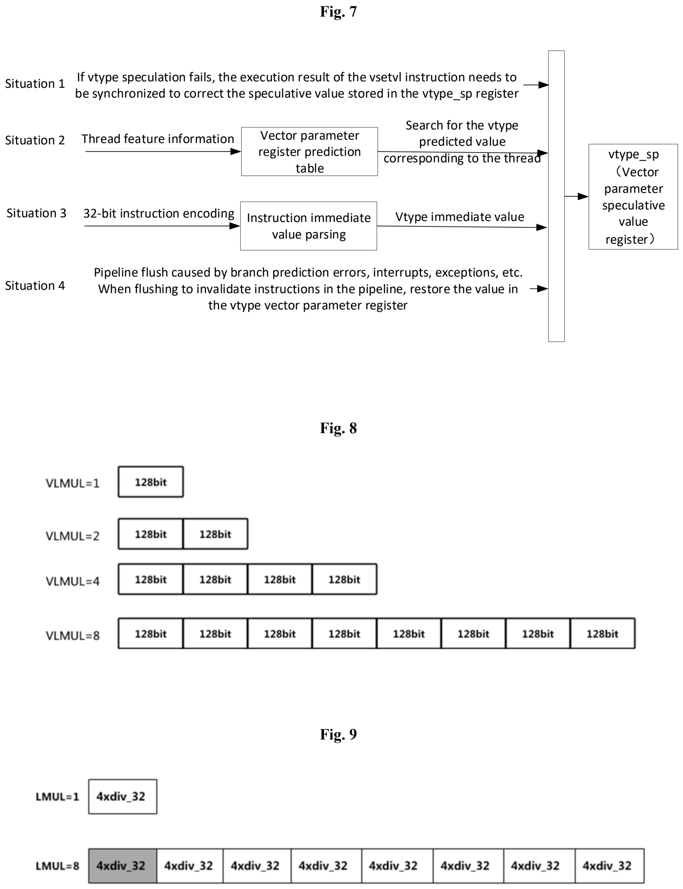

In operation 1, the fetched instruction is pre-decoded to identify whether the instruction is a vset{i}vl{i} instruction. The source of the vector parameter for updating the speculative value in the vtype _sp register is determined according to the identification result. Fig. 7 is a schematic diagram of the composition of update sources of vtype_sp in the instruction processing method according to an embodiment of the present disclosure. The specific situations are discussed as follows.

Situation 1: Since the vsetvl is obtained through the prediction table and is a speculative predicted value, the execution unit compares the execution result of the vsetvl instruction with the predicted value. If the execution result of the vsetvl instruction and the predicted value do not match, it indicates a prediction error and a vtype speculative failure. It is necessary to synchronize the execution result of the vsetvl instruction to correct the speculative value saved in the vtype _sp register, that is, the execution unit will send the correct vtype value to restore the vtype _sp speculative value, and subsequent instructions will be split based on the restored speculative value.

Situation 2: If the instruction is a vsetvl instruction (non-immediate instruction, that is, the configuration value needs to be obtained through a register), the vtype predicted value is obtained through prediction based on the thread feature information, and the vtype _sp (vtype speculative value) is updated with the predicted value; wherein the above-mentioned prediction is used to indicate that the vtype predicted value of the corresponding thread is searched in the vector parameter register prediction table according to the thread feature information.

Situation 3: If the instruction is a vsetivli/vsetvli instruction (immediate instruction), the configuration value obtained from the immediate value of the encoding of the instruction itself can be used to update the current vtype speculative value (the value of the vtype _sp register), and all subsequent vector instructions will carry this vtype speculative value to the instruction decoding unit until a new vset{i}vl{i} instruction is used for update, or the instruction commit part repairs the vtype speculative value, or the vtype _sp is corrected after the vector parameter speculative failure.

It should be noted that if the instruction is not a vset{i}vl{i} instruction, the current vtype speculative value needs to be maintained, and all subsequent vector instructions will carry the current vtype speculative value to the instruction decoding unit until a new vset{i}vl{i} instruction or the instruction commit unit updates the speculative value.

Situation 4: When a branch prediction error occurs or a Pipeline flush is caused by an interrupt, exception, etc. to invalidate the instructions in the pipeline, the value in the vtype vector parameter register needs to be restored, and the value in the vtype_sp vector parameter speculative value register also needs to be restored, because the vset{i}vl{i} instruction on the instruction stream before the flush point will update the vtype to an inaccurate value.

In operation 2, the instruction decoding unit splits the vector instruction according to the LMUL configuration value in the vtype speculative value.

For example, the current LMUL=8, which indicates that 8 vector registers form a group, and the vector length is 8*VLEN, where the VLEN is a constant parameter determined by a specific implementation, set to specify the width of a single vector register, such as 128-bit. Fig. 8 is a schematic diagram of vector register grouping configuration according to an embodiment of the present disclosure.

The instruction decoding unit splits a vector instruction affected by LMUL into 8 micro-operations (referred to as UOPs) according to the VLEN granularity, and the length of a single UOP is equal to the vector length when LMUL=1. Since the decoding unit only outputs a specific number of decoded instructions per clock, there is a maximum number limit. For example, the maximum number of decoded instructions output per clock cycle is 4, then the above-mentioned one vector instruction will take 2 clock cycles to complete the splitting.

If the splitting of long vector instructions is not performed, such as LMUL=8, then a vector instruction with two source operands plus one destination operand needs to read the renaming mapping of 8x2=16 registers and apply for 8 free physical registers as destination registers. A high-performance processor core generally processes multiple instructions per clock, such as 4 instructions, so 8x16=128 read ports of the renaming mapping table are needed per clock cycle to obtain the mapping relationship, and 32 free physical registers need to be applied for per clock cycle. In addition, the instruction issuing unit needs to save multiple source registers and destination registers, and during the instruction wakeup, it is needed to compare multiple source registers, resulting in large area and power consumption overhead. If the long vector instruction is split according to the LMUL=1 granularity, the processing logic related to registers in the subsequent pipeline can be reduced to 1/8 of the original, which greatly simplifies the design complexity, area, and power consumption overhead. High-performance processing is generally designed at a high frequency, and the frequency generally reaches more than 3GHz. The simplified instruction splitting design can achieve a better frequency. In addition, the renaming unit has 128 read ports, or the wakeup circuit of multiple registers in the instruction issuing unit, which will lead to congestion problems caused by too many local area connections in physical implementation, which is not conducive to physical implementation, and may further make timing worse and power consumption overhead larger.

In an exemplary embodiment, in order to achieve a balance between area, power consumption, and performance, the execution unit of some special vector instructions (such as the area of a single execution unit is large) will not be equipped with an execution unit according to the maximum number of vector elements vlmax. Assuming that the bit width SEW of the vector element is equal to 16bit and VLEN=128bit, then vlmax=128/16=8, and the instruction decoder can split the vector instruction through the SEW configuration. The method for obtaining SEW is the same as that for LMUL, which is obtained from the previous vector parameter generation unit, and the processing method of the vector parameter generation unit for SEW is also the same_{∘}

The splitting by the instruction decoder reduces the complexity, area, and power consumption overhead of re-splitting in the execution unit and the issuing unit. Because most of the execution units process instructions in a Pipeline manner, instructions will enter the pipeline back to back. If an instruction among the instructions needs to be split, it is necessary to stall the pipeline to make room for the split UOPs to be processed, which is likely to cause Pipeline bubbles and Pipeline flush. By virtue of the Pipeline flush, the instructions that have been issued but cannot enter the execution unit to be executed are flushed. Because the suspension caused by instruction splitting stalls the pipeline flow, the instruction cannot enter the execution unit. After flushing, the instruction is re-issued, resulting in significant power consumption waste. If the instruction is split in the instruction issuing unit, it is necessary to add splitting logic circuits for each entry in the issue queue. Usually, the issue queue is composed of multiple entries, and if each entry requires a set of splitting logic, the area and power consumption overhead will also be significant. However, through the above-mentioned splitting process, the instruction decoding unit only needs to perform splitting according to the decoding width. In general, the decoding width is much smaller than the number of entries in the issue queue. After splitting, the subsequent stages of the Pipeline (such as the renaming unit and the instruction issuing unit) do not need to perceive changes in LMUL and SEW. Therefore, the circuit complexity of the subsequent stages of the Pipeline is reduced, and the area and power consumption are optimized.

In operation 3, the renaming unit processes the instructions according to the UOP granularity.

It should be noted that after the above-mentioned processing, although LMUL=8, the vector register width perceived by the renaming unit is always the VLEN width and is not affected by changes in the vector register grouping configuration LMUL. The renaming unit does not require additional renaming mapping table read ports or read port arbitration logic to adapt to the scenario where LMUL>1, nor does the renaming unit need to allocate 8 times the number of free registers (the maximum value of LMUL is 8) per clock cycle, which also simplifies the allocation and management logic of free physical registers, enabling better timing, power consumption, and area.

In operation 4, the instruction issuing unit processes the split instructions according to the UOP granularity. Usually, the issue queue needs to store the register identification (referred to as register IDs) of the instructions to query and determine whether the operands of the instructions in the issue queue are ready. All operands can only be issued when the operands are ready; if not ready, the register IDs are also used for matching and wake-up, and the instructions can be normally issued only after wake-up. After the decoding unit splits the vector instructions, the entries in the issue queue only need to store the register IDs at the granularity of UOP and VLEN, instead of storing the register IDs of the entire instruction. It should be noted that since the maximum value of LMUL is 8, the maximum number of register IDs for a single instruction is 8 times that of a single UOP. That is, the instruction issuing unit is not affected by changes in LMUL, which can greatly reduce the area overhead of storing register IDs. In addition, the process of waking up instructions in the issue queue requires comparing the register IDs stored in the entries, thus, fewer register IDs result in fewer corresponding comparators, and naturally lower area and power consumption. Moreover, it is necessary to determine whether all source operands are ready; if there are more registers, the timing will naturally be worse. After instruction splitting, only the number of registers at the UOP granularity needs to be judged, and the timing will also be better.

In operation 5, the execution unit processes the split instructions according to the UOP granularity and does not need to be equipped with computing components according to the vector bit width configured by LMUL. For example, if LMUL=8, the vector width is 8 times the width of the physical register. At this time, equipping execution units according to 8 times the number will result in relatively large area and power consumption, and when the configured value of LMUL is small, the execution unit cannot be fully utilized.

Fig. 9 is a schematic diagram of the composition of two different computing resource configurations according to an embodiment of the present disclosure. To implement a constant VLEN parameter of 128 bits, a comparison is made between supporting 4 32-bit dividers and 32 dividers. If dividers are equipped according to the maximum vector (vector register grouping configuration LMUL=8), 32-4=28 dividers will be in an idle state when LMUL=1, which is used in more applications, resulting in extremely low area efficiency. Therefore, a more balanced design is to equip computing resources (e.g., the number of dividers) based on the VLEN width and achieve a better balance between area and performance by means of UOP splitting. As shown earlier, splitting UOPs in the decode stage (before renaming) is the optimal approach; the later the splitting occurs, the more information needs to be transmitted in the pipeline, leading to greater power consumption and area overhead.

In an exemplary embodiment, a fast recovery processing scheme for vsetvl speculative failure is further provided. As shown in Fig. 5, the vsetvl instruction can carry the vtype predicted value obtained from the prediction table and transmit the vtype predicted value to the execution unit along with the vsetvl instruction itself. The execution unit has acquired the source operand, and therefore can execute the instruction and obtain the execution result. By comparing the execution result with the vtype predicted value, it can be detected whether the prediction is normal, if the execution result is not equal to the vtype predicted value, it indicates a prediction error and speculative failure; if the execution result is equal to the vtype predicted value, the speculation is successful. Since all instructions newer than the vsetvl instruction are processed based on the predicted value (or speculative value), if the speculation fails, all these instructions newer than the vsetvl instruction need to be flushed, and then instruction fetch and execution are restarted from the next instruction of the vsetvl. However, before that, the value of vtype_sp needs to be updated with the execution result of the vsetvl instruction to ensure that the re-fetched instructions can perform subsequent processing (e.g., splitting UOPs) based on the correct vtype_sp value.

It should be noted that since the source operand of the vsetvl instruction (used to update the vtype register) is derived from the General Purpose Register (GPR), the source operand may also come from the execution result of another older instruction and has not undergone relevant processing such as register renaming. Therefore, the source operand cannot be obtained in the pre-decoding and decoding stages of the instruction, while vector instruction splitting depends on the vtype vector parameter. One scheme is that the vsetvl instruction stalls on the Pipeline to wait for the result of the older instruction and processes the vsetvl instruction only after obtaining the result. However, the pipeline stall caused by this (the vsetvl instruction depends on the return of memory access data; if there is a multi-level cache miss, this time will be very long; if it does not depend on the results of other instructions, it will generally stall for 5 to 10 clock cycles, which is related to the specific microarchitecture implementation) will block the out-of-order execution of subsequent instructions, resulting in a significant impact on performance. Another scheme is to adopt thread feature information for prediction, since the vsetvl instruction is mostly used for context recovery after thread switching, prediction can be performed using thread history records. However, prediction may be incorrect, so such prediction errors require a detection and fast recovery method that does not need to wait until the instruction reaches the commit stage to check whether the prediction is correct, thereby achieving better performance. Because the thread feature information is relatively clear, the probability of prediction error is relatively low, and prediction can reduce pipeline stalls, resulting in a significant improvement in performance.

In an exemplary embodiment, in practical applications, the above-mentioned implementation can also be applied to the following specific scenarios:
Scenario 1: Applied to all general-purpose CPU cores supporting vector instructions;
Scenario 2: Applied to DSP processors, vector processors, or GPUs;
Scenario 3: Applied to scalar-only processors, where certain complex scalar instructions may require speculative UOP splitting based on a specific configuration parameter and fast recovery after speculative failure;
Scenario 4: Applied in SOC chips, for example, the main control SOC chips of communication devices (such as routers, switches, base station controllers, etc.) for controlling and managing various operations of the communication devices; or used in baseband signal processing SOC chips.

Through the above embodiments, vector instruction splitting is performed by speculatively obtaining vector parameter information in advance (including but not limited to LMUL, such as SEW), eliminating the need to stall the pipeline to wait for the execution result of vsetvl. If vsetvl may depend on the results of other instructions, the waiting time will be relatively long, leading to prolonged pipeline stalls. Obtaining the vtype value in advance through prediction can reduce pipeline stalls, thereby achieving better performance. Splitting long vector instructions can reduce the design complexity of the subsequent pipeline of the CPU core (including the renaming unit, instruction issuing unit, instruction execution unit, etc.), reduce area and power consumption overhead, and achieve better area efficiency and energy efficiency. Furthermore, high-performance processing cores generally commit instructions in order. Through the above-mentioned fast recovery method after prediction failure, there is no need to wait until the vsetvl instruction reaches the commit stage to check whether the vtype is correctly predicted; instead, recovery is performed immediately after the vsetvl instruction obtains the instruction result in the execution stage. This reduces the time from the completion of instruction execution to instruction commit, and advancing recovery achieves better performance. Because instructions are queued and committed in program order, if there are many instructions ahead of vsetvl, the time from the completion of instruction execution to instruction commit will be relatively long. Using the fast recovery method in the above embodiments to perform recovery immediately after the completion of instruction execution can reduce this time and achieve better performance.

Through the description of the above implementations, those having ordinary skill in the art can clearly understand that the method according to the above embodiments can be implemented by means of software plus a necessary general hardware platform, and of course, can also be implemented by hardware, but in many cases, the former is a better implementation. Based on this understanding, the technical solution of the present disclosure essentially or the part that contributes to the related art can be embodied in the form of a software product. The computer software product is stored in a storage medium (such as a Read-Only Memory/Random Access Memory (ROM/RAM), a magnetic disk, an optical disk), and may include several instructions to enable a terminal device (which may be a mobile phone, a computer, a server, or a network device, etc.) to execute the method described in each embodiment of the present disclosure.

### Embodiment 2

In this embodiment, an instruction processing device is also provided, which is used to implement the above-mentioned embodiments and exemplary implementations, and what has been described will not be repeated. As used below, the term "module" may be a combination of software and/or hardware that implements a predetermined function. Although the device described in the following embodiment is preferably implemented by software, the implementation by hardware or a combination of software and hardware is also possible and conceived.

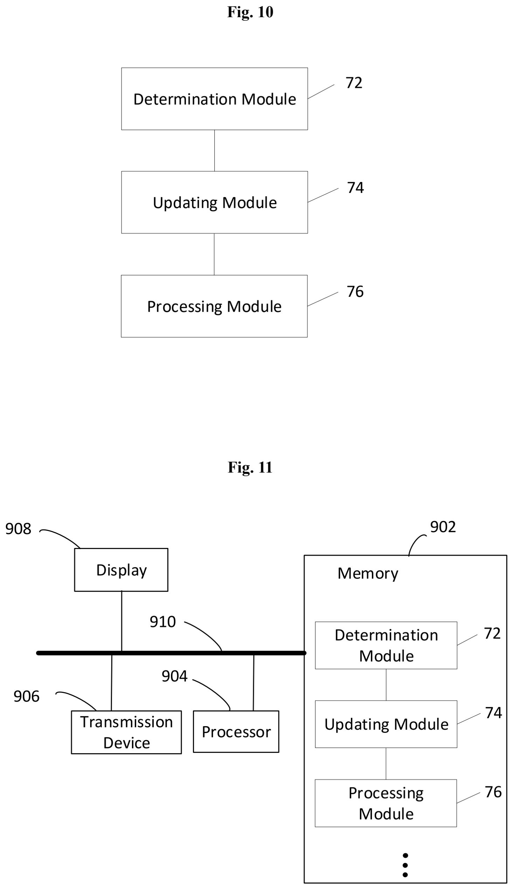

Fig. 10 is a schematic structural diagram of an instruction processing device according to an embodiment of the present disclosure. As shown in Fig. 10, the device may include:
a determination module 72 configured to determine at least one to-be-processed instruction of a first type from a plurality of to-be-processed instructions according to a preset instruction code, wherein the at least one to-be-processed instruction of the first type is used for updating a first vector parameter in a speculative value register;
an updating module 74 configured to update the first vector parameter to a second vector parameter by using an update manner corresponding to the at least one to-be-processed instruction of the first type; and
a processing module 76 configured to split a long vector instruction among other to-be-processed instructions into a plurality of micro-operations based on the second vector parameter, and perform renaming processing on the other to-be-processed instructions according to the plurality of micro-operations, wherein the other to-be-processed instructions are instructions from the plurality of to-be-processed instructions excluding the at least one to-be-processed instruction of the first type.

Through the above device, in the system architecture corresponding to a Central Processing Unit (CPU) core, at least one to-be-processed instruction of the first type in to-be-processed instructions is identified by using the preset instruction code, so as to obtain the second vector parameter through speculation between instruction decoders. Further, based on a register vector grouping value included in the second vector parameter, an instruction splitting subunit configured in an instruction decoding unit is instructed to split the long vector instruction among other to-be-processed instructions into a plurality of micro-operations. Thus, through fine-grained micro-operations, the area and power consumption overhead of the renaming and instruction issuing units for long vector processing are reduced, and the complexity and power consumption overhead on the execution unit for re-splitting long vector instructions into micro-operations are also reduced. That is, by determining the vector parameter in advance and using the vector parameter to split the long vector before executing the corresponding long vector, the problems in the related art regarding the excessive complexity of the execution circuit in the processor for vector instructions and the high area and power consumption overhead are solved, thereby achieving the effect of reducing the design complexity of the execution circuit and realizing a better processing frequency within a limited area, and improving the user experience.

As an exemplary implementation, the above-mentioned device may further include: a time module configured to, before updating the first vector parameter to the second vector parameter by using the update manner corresponding to the at least one to-be-processed instruction of the first type, determine an instruction count of the at least one to-be-processed instruction of the first type among the plurality of to-be-processed instructions; in a case where the instruction count is greater than a preset number, determine an update time for each of multiple to-be-processed instructions of the first type to update the first vector parameter, so as to obtain multiple update times; determine multiple update intervals according to a temporal relationship of the multiple update times, wherein target other to-be-processed instructions processed within each update interval adopt a target second vector parameter updated most recently in the update interval.

As an exemplary implementation, the above-mentioned updating module is further configured to, in a case where the to-be-processed instruction of the first type is an immediate instruction, update the first vector parameter to the second vector parameter according to encoding information of the immediate instruction; in a case where the to-be-processed instruction of the first type is a non-immediate instruction, update the first vector parameter to the second vector parameter by using a predicted value associated with the non-immediate instruction.

As an exemplary implementation, the above-mentioned updating module is further configured to determine a first configuration value for vector register grouping configuration and a second configuration value corresponding to a bit width of vector elements according to the encoding information of the immediate instruction; and update the first vector parameter to the second vector parameter by using the first configuration value and the second configuration value.

As an exemplary implementation, the above-mentioned updating module is further configured to determine feature information corresponding to a thread that processes the non-immediate instruction; and search the preset vector parameter prediction table for a predicted value that matches the feature information, and update the first vector parameter to the second vector parameter by using the predicted value.

As an exemplary implementation, the above-mentioned updating module further includes: a comparison unit configured to, after updating the first vector parameter to the second vector parameter by using the predicted value, acquire an execution result corresponding to the non-immediate instruction, and determine an actual value corresponding to the execution result; and compare the actual value with the predicted value to determine whether a speculative operation of updating the first vector parameter to the second vector parameter by using the predicted value is valid based on the comparison result.

As an exemplary implementation, the above-mentioned comparison unit is further configured to, in a case where the actual value is the same as the predicted value, determine that the speculative operation of updating the first vector parameter to the second vector parameter by using the predicted value is valid; in a case where the actual value is different from the predicted value, determine that the speculative operation of updating the first vector parameter to the second vector parameter by using the predicted value is invalid.

As an exemplary implementation, the above-mentioned updating module further includes: an updating unit configured to update the first vector parameter in the speculative value register by using the actual value to obtain a third vector parameter; identify at least one target to-be-processed instruction subsequent to the non-immediate instruction among the plurality of to-be-processed instructions; in a case where the target to-be-processed instruction is a long vector, split the target to-be-processed instruction into a plurality of target micro-operations by using the third vector parameter; and perform renaming processing on the target to-be-processed instruction according to the plurality of target micro-operations.

It should be noted that the above-mentioned modules can be implemented by software or hardware. For the latter case, they can be implemented in the following ways, but not limited to: all the above-mentioned modules are located in the same processor; or the above-mentioned modules are located in different processors in any combination.

For the convenience of understanding the technical solution provided by the embodiments of the present disclosure, the following will elaborate on the embodiments in combination with a specific scenario.

An embodiment of the present disclosure also provides a computer-readable storage medium, where a computer program is stored in the computer-readable storage medium, and the computer program, when running, implements the operations in any one of the above-mentioned method embodiments.

In an exemplary embodiment, the above-mentioned computer-readable storage medium may include but not limited to: a Universal Serial Bus (USB) disk, a Read-Only Memory (ROM), a Random Access Memory (RAM), a mobile hard disk, a magnetic disk, or an optical disk, etc., which can store computer programs.

An embodiment of the present disclosure also provides an electronic device, which may include a memory and a processor, where a computer program is stored in the memory, and the processor is configured to run the computer program to execute the operations in any one of the above-mentioned method embodiments.

Optionally, in this embodiment, the above-mentioned processor may be configured to execute the following operations S1 to S3 through a computer program.

In operation S1, at least one to-be-processed instruction of a first type is determined from a plurality of to-be-processed instructions according to a preset instruction code, wherein the at least one to-be-processed instruction of the first type is used for updating a first vector parameter in a speculative value register.

In operation S2, the first vector parameter is updated to a second vector parameter by using an update manner corresponding to the at least one to-be-processed instruction of the first type.

In operation S3, a long vector instruction among other to-be-processed instructions is split into a plurality of micro-operations based on the second vector parameter, and renaming processing is performed on the other to-be-processed instructions according to the plurality of micro-operations, wherein the other to-be-processed instructions are instructions from the plurality of to-be-processed instructions excluding the at least one to-be-processed instruction of the first type.

Optionally, those having ordinary skill in the art can understand that the structure shown in Fig. 11 is only schematic, and the electronic device can also be a smart phone (such as an Android phone, an iOS phone, etc.), a tablet computer, a palmtop computer, a Mobile Internet Device (MID), a PAD, etc. Fig. 11 does not limit the structure of the above-mentioned electronic device. For example, the electronic device may include more or fewer components (such as a network interface, etc.) than those shown in Fig. 11, or have a different configuration from that shown in Fig. 11.

The memory 902 may be used to store software programs and modules, such as program instructions/modules corresponding to the instruction processing method and device in the embodiments of the present disclosure. The processor 904 executes various functional applications and data processing by running the software programs and modules stored in the memory 902, that is, implements the above-mentioned instruction processing method. The memory 902 may include a high-speed random access memory, and may also include a non-volatile memory, such as one or more magnetic storage devices, flash memory, or other non-volatile solid-state memories. In some examples, the memory 902 may further include a memory remotely set relative to the processor 904, and these remote memories may be connected to the terminal through a network. Examples of the above-mentioned network may include but not limited to the Internet, an enterprise intranet, a local area network, a mobile communication network, and combinations thereof. As an example, as shown in Fig. 11, the memory 902 may include, but is not limited to, the determination module 72, the updating module 74, and the processing module 76 in the above-mentioned instruction processing method device. In addition, it may also include but not limited to other module units in the above-mentioned instruction processing method device, which will not be repeated in this example.

Optionally, the above-mentioned transmission device 906 is used to receive or send data via a network. Specific examples of the above-mentioned network may include a wired network and a wireless network. In an example, the transmission device 906 includes a Network Interface Controller (NIC), which can be connected to other network devices and routers through a network cable to communicate with the Internet or a local area network. In an example, the transmission device 906 is a Radio Frequency (RF) module for communicating with the Internet in a wireless manner.

In addition, the above-mentioned electronic device further includes: a display 908 configured to display the above-mentioned to-be-processed instructions; and a connection bus 910 configured to connect each module component in the above-mentioned electronic device.

In an exemplary embodiment, the above-mentioned electronic device may further include a transmission device and an input/output device, where the transmission device is connected to the processor, and the input/output device is connected to the processor.

Specific examples in this embodiment can refer to the examples described in the above-mentioned embodiments and exemplary implementations, and this embodiment will not be repeated here.

Obviously, those having ordinary skill in the art should understand that each module or each operation of the above-mentioned present disclosure can be implemented by a general computing device, and they can be concentrated on a single computing device, or distributed on a network composed of multiple computing devices, and they can be implemented by program codes executable by a computing device, so that they can be stored in a storage device for execution by a computing device, and in some cases, the operations shown or described can be executed in an order different from here, or they can be respectively made into various integrated circuit modules, or multiple modules or operations of them can be made into a single integrated circuit module to implement. Thus, the present disclosure is not limited to any specific combination of hardware and software.

The above are only the exemplary embodiments of the present disclosure and are not intended to limit the present disclosure. For those having ordinary skill in the art, the present disclosure may have various modifications and changes. Any modifications, equivalent replacements, improvements, etc. made within the principles of the present disclosure shall be included in the protection scope of the present disclosure.

## Claims

1. An instruction processing method, comprising:
determining at least one to-be-processed instruction of a first type from a plurality of to-be-processed instructions according to a preset instruction code, wherein the at least one to-be-processed instruction of the first type is used for updating a first vector parameter in a speculative value register;
updating the first vector parameter to a second vector parameter by using an update manner corresponding to the at least one to-be-processed instruction of the first type; and
splitting a long vector instruction among other to-be-processed instructions into a plurality of micro-operations based on the second vector parameter, and performing renaming processing on the other to-be-processed instructions according to the plurality of micro-operations, wherein the other to-be-processed instructions are instructions from the plurality of to-be-processed instructions excluding the at least one to-be-processed instruction.

2. The method according to claim 1, wherein before updating the first vector parameter to the second vector parameter by using the update manner corresponding to the at least one to-be-processed instruction of the first type, the method further comprises:
determining an instruction count of the at least one to-be-processed instruction of the first type among the plurality of to-be-processed instructions;
in a case where the instruction count is greater than a preset number, determining an update time for each of multiple to-be-processed instructions of the first type to update the first vector parameter, so as to obtain multiple update times; and
determining multiple update intervals according to a temporal relationship of the multiple update times, wherein target other to-be-processed instructions processed within each update interval adopt a target second vector parameter updated most recently in the update interval.

3. The method according to claim 1, wherein updating the first vector parameter to the second vector parameter by using the update manner corresponding to the at least one to-be-processed instruction of the first type comprises:
in a case where the to-be-processed instruction of the first type is an immediate instruction, updating the first vector parameter to the second vector parameter according to encoding information of the immediate instruction;
in a case where the to-be-processed instruction of the first type is a non-immediate instruction, updating the first vector parameter to the second vector parameter by using a predicted value associated with the non-immediate instruction.

4. The method according to claim 3, wherein updating the first vector parameter to the second vector parameter according to the encoding information of the immediate instruction comprises:
determining a first configuration value for vector register grouping configuration and a second configuration value corresponding to a bit width of vector elements according to the encoding information of the immediate instruction; and
updating the first vector parameter to the second vector parameter by using the first configuration value and the second configuration value.

5. The method according to claim 3, wherein updating the first vector parameter to the second vector parameter by using the predicted value associated with the non-immediate instruction comprises:
determining feature information corresponding to a thread that processes the non-immediate instruction; and
searching a preset vector parameter prediction table for a predicted value that matches the feature information, and updating the first vector parameter to the second vector parameter by using the predicted value.

6. The method according to claim 5, wherein after updating the first vector parameter to the second vector parameter by using the predicted value, the method further comprises:
acquiring an execution result corresponding to the non-immediate instruction, and determining an actual value corresponding to the execution result; and
comparing the actual value with the predicted value to determine, according to a comparison result, whether a speculative operation of updating the first vector parameter to the second vector parameter by using the predicted value is valid.

7. The method according to claim 6, wherein comparing the actual value with the predicted value to determine, according to the comparison result, whether the speculative operation of updating the first vector parameter to the second vector parameter by using the predicted value is valid comprises:
determining that the speculative operation of updating the first vector parameter to the second vector parameter by using the predicted value is valid, in a case where the actual value is the same as the predicted value;
determining that the speculative operation of updating the first vector parameter to the second vector parameter by using the predicted value is invalid, in a case where the actual value is different from the predicted value.

8. The method according to claim 7, wherein after determining that the speculative operation of updating the first vector parameter to the second vector parameter by using the predicted value is invalid, in the case where the actual value is different from the predicted value, the method further comprises:
updating the first vector parameter in the speculative value register by using the actual value to obtain a third vector parameter;
identifying at least one target to-be-processed instruction subsequent to the non-immediate instruction among the plurality of to-be-processed instructions;
in a case where the target to-be-processed instruction is a long vector, splitting the target to-be-processed instruction into a plurality of target micro-operations by using the third vector parameter; and
performing renaming processing on the at least one target to-be-processed instruction according to the plurality of target micro-operations.

9. An instruction processing device, comprising:
a determination module, configured to determine at least one to-be-processed instruction of a first type from a plurality of to-be-processed instructions according to a preset instruction code, wherein the at least one to-be-processed instruction of the first type is used for updating a first vector parameter in a speculative value register;
an updating module, configured to update the first vector parameter to a second vector parameter by using an update manner corresponding to the at least one to-be-processed instruction of the first type; and
a processing module, configured to split a long vector instruction among other to-be-processed instructions into a plurality of micro-operations based on the second vector parameter, and perform renaming processing on the other to-be-processed instructions according to the plurality of micro-operations, wherein the other to-be-processed instructions are instructions from the plurality of to-be-processed instructions excluding the at least one to-be-processed instruction.

10. A computer-readable storage medium, wherein the computer-readable storage medium stores a computer program, and the computer program, when executed by a processor, causes the processor to implement operations of the method according to any one of claims 1 to 8.

11. An electronic device, comprising a memory, a processor, and a computer program stored on the memory and executable on the processor, wherein the processor, when executing the computer program, implements operations of the method according to any one of claims 1 to 8.
